Europäisches Patentamt

European Patent Office

Office européen des brevets

(19)

(11) Veröffentlichungsnummer : **0 070 409**
**B1**

(12) **EUROPÄISCHE PATENTSCHRIFT**

(45) Veröffentlichungstag der Patentschrift :
28.08.85

(21) Anmeldenummer : 82105568.8

(22) Anmeldetag : 24.06.82

(51) Int. Cl.⁴ : **C 21 D 1/10, C 21 D 9/14**

(54) Verfahren und Einrichtung zum Induktionshärten länglicher dünnwandiger Werkstücke.

(30) Priorität : 22.07.81 US 285788

(43) Veröffentlichungstag der Anmeldung :
26.01.83 Patentblatt 83/04

(45) Bekanntmachung des Hinweises auf die Patenterteilung : 28.08.85 Patentblatt 85/35

(84) Benannte Vertragsstaaten :
**AT BE CH DE FR GB IT LI LU NL SE**

(56) Entgegenhaltungen :
**DE-A- 1 433 721**
**DE-A- 1 533 955**
**DE-C- 540 920**
**DE-C- 959 101**
**GB-A- 620 386**
**US-A- 2 076 515**

(73) Patentinhaber : **PARK-OHIO INDUSTRIES, INC.**
**20600 Chagrin Boulevard**
**Shaker Heights Ohio 44122 (US)**

(72) Erfinder : **Novorsky, Donald Edward**
**15606 Norway Avenue**
**Cleveland, Ohio 44111 (US)**

(74) Vertreter : **Vollbach, Hans, Dipl.-Ing.**
**Patentanwälte Dipl.-Ing. Buschhoff Dipl.Ing Hennicke**
**Dipl.-Ing. Vollbach Kaiser-Wilhelm-Ring 24**
**D-5000 Köln 1 (DE)**

Jouve, 18, rue St-Denis, 75001 Paris, France

**0 070 409**

**Beschreibung**

Die Erfindung betrifft ein Verfahren zum Induktionshärten länglicher dünnwandiger Werkstücke, die eine Bohrung od. dgl. mit in Axialrichtung zumindest auf Teilbereichen gleichmäßiger Querschnittsform aufweisen, wobei zum Härten der Innenfläche der Bohrung mit einer vorbestimmten Einhärtetiefe und auf mindestens Teilbereichen der Innenfläche eine der Querschnittsform der Bohrung angepaßte Induktorvorrichtung unter Erhitzen der Innenfläche axial durch die Bohrung hindurchgeführt und gleichzeitig unmittelbar hinter der Induktorvorrichtung die erhitzte Innenfläche, vorzugsweise mittels eines flüssigen Abschreckmediums, abgeschreckt wird. Ferner ist die Erfindung auf eine zweckdienliche Einrichtung zum Induktionshärten von Werkstücken der genannten Art gerichtet.

Die Erfindung ist insbesondere für das Induktionshärten von dünnwandigen Werkstücken aus Stahl gerichtet, die eine Innenbohrung bzw. einen Kanal od. dgl. mit drei in Umfangsrichtung versetzten Ausweitungen aufweisen und die bei Antriebssystemen für einen Vorderradantrieb von Fahrzeugen Verwendung finden. Darüber hinaus hat die Erfindung einen breiteren Anwendungsbereich. Sie kann zur Oberflächenhärtung von Innenbohrungen dünnwandiger Werkstücke von unterschiedlicher Profilierung und Formgebung der die zu härtende Innenfläche bildenden Bohrung Verwendung finden. Dabei lassen sich mit dem erfindungsgemäßen Verfahren die Innenbohrungen oder die Hohlräume der verschiedenartigen Werkstücke auf bestimmten axialen Flächenbereichen oder aber auch auf der gesamten Innenfläche der Bohrung od. dgl. härten.

Es ist bekannt, die Innenflächen von zylindrischen Werkstücken zu härten und hierbei einen ringförmigen Induktor zu verwenden, welcher der zylindrischen Innenfläche angepaßt und im Durchmesser etwas kleiner bemessen ist als die Werkstückbohrung, so daß zwischen dem Induktor und der zylindrischen Innenfläche des Werkstücks ein Kopplungsspalt vorhanden ist. Der strombeaufschlagte Induktor wird in Vertikalrichtung durch as an einem Werkstücksupport gehaltene Werkstück hindurchgeführt, wodurch dessen zylindrische Innenfläche auf induktivem Wege erwärmt wird. Zur Härtung der Innenfläche ist unter dem Induktor ein Abschreckkörper angeordnet, der mit Spritzöffnungen für eine Abschreckflüssigkeit versehen ist. Durch Abschrecken der zuvor erwärmten Werkstückfläche wird diese gehärtet (GB-A-620 386).

Um eine gleichmäßige Erwärmung und Härtung der zylindrischen Werkstückfläche zu erzielen, wird bei der vorgenannten bekannten Einrichtung das Werkstück um die Mittelachse seiner zylindrischen Bohrung gedreht, so daß der durch die Bohrung hindurchgeführte Induktor mit seinem Abschreckkörper auf die rotierende zylindrische Werkstückfläche zur Einwirkung gelangt. Mit dieser Verfahrensweise lassen sich Werkstücke, die um ihre zylindrische Innenfläche herum eine größere Metallmasse aufweisen, härten, ohne daß es hierbei zu einem nennenswerten Verwerfen und Verziehen der zylindrischen Innenfläche kommt. Ist aber um die zylindrische Innenfläche herum nur eine kleine Werkstoffmasse vorhanden, wie dies bei dünnwandigen Werkstücken der Fall ist, bei denen die Einhärtetiefe z. B. etwa 50 % der gesamten Wandstärke beträgt, so stellt sich während des Abschreckhärtens häufig ein axiales Verziehen des Werkstücks ein mit der Folge, daß seine Zylinderfläche nach dem Härtevorgang einer schleifenden Nachbehandlung zur Erzielung der genauen Sollabmessungen unterworfen werden muß. In manchen Fällen muß selbst bei dickeren Wandstärken des Werkstücks nach dem Härtevorgang eine Schleifbehandlung zur Erzielung einer exakten Zylinderbohrung vorgenommen werden.

Das kombinierte Induktionshärten mit nachfolgender Schleifbearbeitung läßt sich erfolgreich durchführen, wenn das dünnwandige Werkstück eine zylindrische Innenbohrung aufweist. Außerordentliche Schwierigkeiten ergeben sich aber in der Praxis dann, wenn die Bohrung des dünnwandigen Werkstücks nicht zylindrisch ist. Die Innenfläche einer nicht-zylindrischen Bohrung in einem dünnwandigen Werkstück läßt sich auf wirtschaftliche Weise nicht so nachschleifen, daß etwaige Verziehungen und Verwerfungen des Werkstücks in axialer Richtung mit hinreichender Genauigkeit egalisiert werden können. Die hier bestehenden Probleme sind um so größer, je größer die axiale Länge der Innenbohrung ist. Das herkömmliche Induktions- und Abschreckhärten ist daher in der Praxis nicht bei dünnwandigen Werkstücken anwendbar, deren Axialbohrung eine von der Zylinderform abweichende Querschnittsform hat, wenn Toleranzen von etwa 0,025 bis 0,076 mm über eine Länge von 100 bis 152,5 mm eingehalten werden müssen. Es haben sich daher in der Praxis erhebliche Schwierigkeiten ergeben, die Innenflächen von Werkstücken auf induktivem Wege zu härten, deren Bohrung drei in Umfangsrichtung versetzte Ausweitungen aufweisen, wie dies bei den Außengehäuseteilen eines Vorderrad-Antriebsmechanismus für Motorfahrzeuge der Fall ist. Solche Gehäuseteile, die als « Tripod-Gehäuse » bezeichnet werden, müssen nach dem Induktionshärten sehr enge axiale Toleranzen aufweisen. Eine Innenbearbeitung der Gehäusebohrungen ist hier nur mit hohem wirtschaftlichen Aufwand möglich.

Es ist auch schon ein Verfahren zum Induktionshärten der Innenwandungen von Rohren bekannt, bei dem die Erwärmungszeit bzw. die Dicke der erwärmten Schicht bei gegebener kritischer Abkühlungszeit der Werkstoffes oder die Werkstoffzusammensetzung oder die Werkstückbemessung derart gewählt werden, daß ohne zusätzliche Kühlmittel oder mittels eines vergleichsweise sehr milden Kühlmittels oder durch Anwendung von Kühlmitteln an der nicht zu härtenden Werkstückoberfläche abgeschreckt wird. Bei dieser Verfahrensweise ist demgemäß durch geeignete Wahl der Erwärmungszonen und der Materialzusammensetzung eine Kühlung des Werkstückes überhaupt nicht oder nur unter Zuhilfenahme eines vergleichsweise milden Kühlmittels allein von der Außenseite her erforderlich.

2

# 0 070 409

Der Erfindung liegt die Aufgabe zugrunde, ein wirtschaftliches Verfahren und eine Einrichtung zu schaffen, mit dem bzw. der sich die Innenbohrungen oder sonstige Hohlräume u. dgl. von Werkstücken, insbesondere solchen mit unrunder Innenbohrung, einwandfrei auf induktivem Wege härten lassen, ohne daß es zu einem unzuträglichen Verwerfen oder Verziehen des Werkstücks beim progressiven Erwärmen und Abschrecken kommt. Die Erfindung ist bevorzugt für das Härten der Innenflächen einer Bohrung eines « Tripod-Gehäuses » der vorgenannten Art oder ähnlicher Werkstücke mit nicht-zylindrischer Innenbohrung bestimmt, wobei selbst dann eine nicht-konische Innenfläche angestrebt wird, wenn die Wandstärke um die Bohrung herum nur angenähert doppelt so groß ist wie die zur Erzielung der erforderlichen Verschleißeigenschaften gewünschte Einhärtetiefe.

Nach dem erfindungsgemäßen Verfahren wird die gestellte Aufgabe dadurch gelöst, daß die strombeaufschlagte Induktorvorrichtung zunächst in einem ersten Durchgang axial in der einen Richtung durch die Bohrung und dann in einem zweiten Durchgang axial in der Gegenrichtung durch die Bohrung geführt wird, wobei bei diesem zweiten Durchgang die Abschreckung der erhitzten Innenfläche unmittelbar hinter der Induktorvorrichtung erfolgt.

Beim ersten Durchgang der Induktorvorrichtung durch die Werkstückbohrung wird kein Abschreckmedium auf die erhitzte Innenfläche der Bohrung aufgebracht. Es empfiehlt sich vielmehr, während des ersten Durchgangs nur die Werkstück-Außenfläche mit dem Abschreckmedium zu beaufschlagen. Das Werkstück wird bei diesem ersten Induktor-Durchgang gezielt konisch vorverformt, wobei diese Vorverformung beim zweiten Induktor-Durchgang aufgehoben bzw. kompensiert wird. Während des zweiten Induktor-Durchgangs wird dabei die progressiv erwärmte Innenfläche der Werkstückbohrung unmittelbar hinter dem Induktor von dem Abschreckmedium beaufschlagt. Zugleich empfiehlt es sich, auch beim zweiten Induktor-Durchgang die Werkstück-Außenfläche mit dem Abschreckmedium zu beaufschlagen.

Vorzugsweise wird das erfindungsgemäße Verfahren so durchgeführt, daß die Induktorvorrichtung bei den beiden Durchgängen durch die Bohrung od. dgl. des vertikal angeordneten Werkstücks bewegt wird, wobei die Induktorvorrichtung zweckmäßig beim ersten Durchgang von oben nach unten und beim zweiten Durchgang von unten nach oben die Bohrung durchläuft. Dabei wird vorteilhafterweise sowohl beim ersten Durchgang (Abwärtsbewegung) als auch beim zweiten Durchgang (Aufwärtsbewegung) der Induktorvorrichtung die Außenfläche des Werkstücks kontinuierlich von dem Abschreckmedium beaufschlagt. Der Induktor-Durchgang durch die Innenbohrung od. dgl. des Werkstücks kann in jedem Fall entweder bei stationärer Induktorvorrichtung und bewegtem Werkstück oder, umgekehrt, bei bewegter Induktorvorrichtung und stationärem Werkstück durchgeführt werden, da es nur auf die Relativbewegung zwischen Werkstück und Induktorvorrichtung ankommt.

Bei Anwendung des erfindungsgemäßen Verfahrens gelingt es, die Innenbohrung des Werkstücks insgesamt oder nur auf axialen Teilflächen einwandfrei zu härten, ohne daß die sich beim Härtevorgang einstellende Neigung oder Konizität der Innenfläche die zulässigen Toleranzen von weniger als 0,076 mm auf angenähert 80 mm Bohrungslänge überschreitet. Das Erwärmen der Innenfläche bei dem ersten Durchgang der Induktorvorrichtung durch die Bohrung und das erneute Erwärmen und gleichzeitige Abschrecken der Innenfläche beim zweiten gegenläufigen Durchgang der Induktorvorrichtung durch die Bohrung kann auch so durchgeführt werden, daß die Erwärmung und Abschreckung erst im Abstand von den Enden der Bohrung einsetzt, so daß die axial gegenüberliegenden Enden der erwärmten und gehärteten Innenfläche im Abstand von den benachbarten Enden der Bohrungen liegen. Je nach dem gewünschten Härtebild und der gewünschten Härtezone läßt sich das erfindungsgemäße Verfahren variieren. Die Induktorvorrichtung kann während des zweiten Durchgangs mit derselben Stromleistung und/oder Stromfrequenz betrieben werden wie während des ersten Durchgangs. Andererseits kann die Induktorvorrichtung beim zweiten Durchgang aber auch mit einer gegenüber dem ersten Durchgang abweichenden Stromleistung beaufschlagt werden. Auch besteht die Möglichkeit, die linearen Durchführungsgeschwindigkeiten der Induktorvorrichtung beim ersten und zweiten Durchgang unterschiedlich einzustellen, insbesondere derart, daß die Durchführungsgeschwindigkeit der Induktorvorrichtung beim ersten Durchgang kleiner eingestellt wird als beim zweiten Durchgang.

Zur Ausübung des erfindungsgemäßen Verfahrens kann eine an sich bekannte Einrichtung der im Oberbegriff des Anspruchs 15 angegebenen Ausführung Verwendung finden. Dabei wird die Anordnung zweckmäßig so getroffen, daß zusätzlich zu der die Werkstück-Innenfläche mit dem Abschreckmedium beaufschlagenden Abschreckvorrichtung eine außenliegende Abschreckvorrichtung zur wahlweisen Beaufschlagung der axialen Werkstück-Außenfläche mit dem Abschreckmedium vorgesehen ist. Die außenliegende Abschreckvorrichtung besteht zweckmäßig aus einem am hubbeweglichen Werkstücksupport angeordneten Abschreckring.

Die beiden Induktor-Durchgänge in gegenläufiger Richtung lassen sich bei dem erfindungsgemäßen Verfahren und der erfindungsgemäßen Einrichtung mit einem einzigen Induktor durchführen, ohne daß hierbei die Raumlage oder die Axialposition des Werkstücks verändert werden muß. Eine solche Lageänderung könnte unter Umständen zu einer verminderten Gleichmäßigkeit des Härteergebnisses führen.

Weitere Merkmale der Erfindung sind in den einzelnen Ansprüchen aufgeführt und werden nachfolgend im Zusammenhang mit dem in der Zeichnung dargestellten Ausführungsbeispiel näher erläutert. In der Zeichnung zeigen :

3

Figur 1 in perspektivischer Darstellung ein « Tripod-Gehäuse », welches für Frontantriebe von Kraftfahrzeugen verwendet wird und welches bevorzugt dem erfindungsgemäßen Härteverfahren unterworfen wird ;

Figur 2 eine erfindungsgemäße Einrichtung in einer schematischen Querschnittsdarstellung zusammen mit dem in Fig. 1 gezeigten, in seiner Arbeitsposition befindlichen Werkstück ;

Figur 3 das Werkstück gemäß Fig. 1 im Querschnitt und nach dem ersten Induktor-Durchgang der Einrichtung nach Fig. 1 ;

Figur 4 die in Fig. 2 gezeigte Einrichtung während des ersten Induktor-Durchgangs ;

Figur 5 im Querschnitt das Werkstück nach Fig. 1 nach Beendigung des im Zusammenhang mit Fig. 4 beschriebenen Arbeitsvorgangs ;

Figur 6 in Draufsicht und in größerem Maßstab eine für das Induktionshärten des Werkstücks nach Fig. 1 bevorzugt verwendete Induktorvorrichtung, deren Querschnittslinie 2-2 bzw. 4-4 im wesentlichen den Querschnitten nach den Fig. 2 und 4 entspricht ;

Figur 7 eine bevorzugte Ausführungsform der mit einer Abschreckvorrichtung versehenen Induktorvorrichtung in perspektivischer Darstellung ;

Figuren 8 und 9 zwei Diagramme zur Darstellung des Härtevorgangs und des Verlaufs der bei dem erfindungsgemäßen Verfahren erzielten Einhärtetiefe.

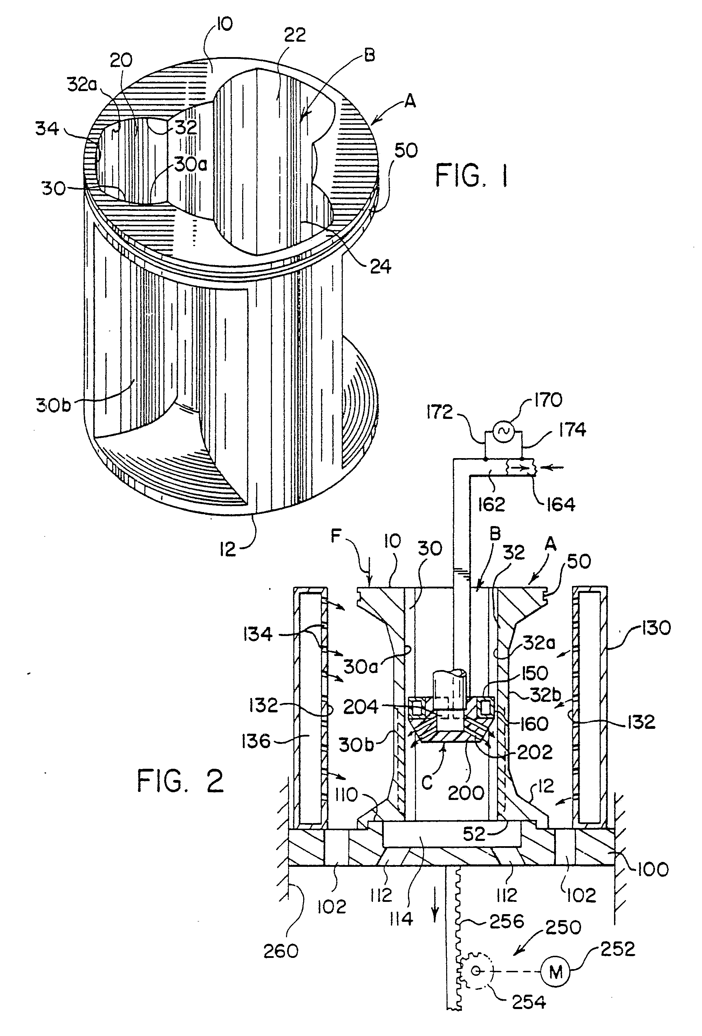

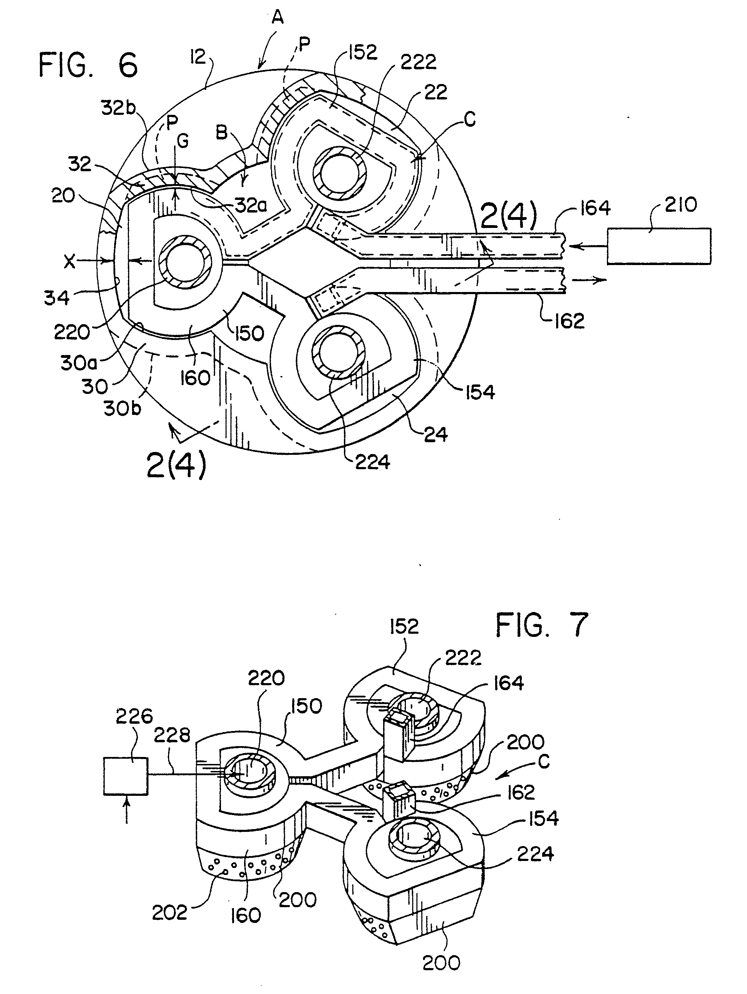

Die Zeichnung, in der ein bevorzugtes Ausführungsbeispiel der Erfindung wiedergegeben ist, zeigt in Fig. 1 ein längliches, dünnwandiges Werkstück A mit einer im wesentlichen kreisförmigen oberen Stirnfläche 10, einer im wesentlichen kreisförmigen unteren Stirnfläche 12 und einer länglichen Bohrung B, die auf ihrer gesamten Länge zwischen den Stirnflächen 10 und 12 einen gleichmäßigen konstanten Querschnitt aufweist. Die unrunde Bohrung B weist drei in gleichmäßigen Umfangsabständen zueinander angeordnete radiale Ausweitungen 20, 22 und 24 auf, wie dies insbesondere auch Fig. 6 erkennen läßt. Da die Ausweitungen 20, 22 und 24 sämtlich im wesentlichen identische Form aufweisen, wird im folgenden lediglich die Formgebung der einen Ausweitung 20 erläutert. Diese Ausweitung 20 weist einander gegenüberliegende Seitenwände 30 und 32 und eine außenliegende Stegwand 34 auf, die sämtlich im wesentlichen dieselbe Wandstärke haben. Die im Abstand zueinander angeordneten Seitenwände 30 und 32 bilden einander gegenüberstehende Innenflächen 30a und 32a, die leicht konkav ausgeformt sind. Diese Innenflächen 30a und 32a werden auf ganzer Länge zwischen den Stirnenden 10 und 12 des Werkstücks A dem Härtevorgang unterworfen, um das in Fig. 6 gezeigte Härtebild P zu erzielen. Die Außenflächen 30b und 32b der Seitenwände 30 und 32 verlaufen im wesentlichen parallel zu den Innenflächen 30a und 32a. Der Abstand der Außen- und Innenflächen 30b, 30a bzw. 32b, 32a, d. h. die Dicke der Seitenwände 30 und 32 ist angenähert doppelt so groß wie die Einhärtetiefe der Härtezonen P. In der Praxis beträgt die Höhe des Werkstücks A etwa 80 mm, wobei die Härtezone sich von einer Stelle, die etwa 9,8 mm von der oberen Stirnfläche 10 entfernt liegt, bis zu einer Stelle erstrecken, die etwa 9,2 mm von der unteren Stirnfläche 12 des Werkstücks entfernt ist. Die Dicke der Wände 30, 32 und 34 beträgt etwa 4,5 mm, die Einhärtetiefe der Härtezonen P angenähert 2,3 mm. Das Werkstück A weist im oberen Bereich eine umlaufende Nut 50 mit einer axialen Höhe von etwa 3,0 mm auf, deren Abstand von der oberen Stirnfläche 10 etwa 7,0 mm beträgt. Der Innendurchmesser der Bohrung B, ohne Einbeziehung der radialen Ausweitungen 20, 22, 24, beträgt angenähert 51,0 mm. Die radiale Abmessung der Härtezonen P entlang den Flächen 30 und 32·beläuft sich auf etwa 16,0 mm. Die Härtezonen P erstrecken sich als streifenförmige Flächenbereiche axial durch das Werkstück A und entlang den Seitenwänden 30 und 32. An der unteren Stirnfläche 12 weist das Werkstück A eine ringförmige Einziehung 52 mit einer Tiefe von etwa 4,0 mm und einem Durchmesser von etwa 86,5 mm auf. Der Gesamtdurchmesser des Werkstücks A beträgt angenähert 92,5 mm. Das Werkstück A besteht aus einem SAE 1050 M-Stahl. Die Tiefe der Härtezonen P in dem dünnwandigen Werkstück beträgt mindestens etwa 30 %, im allgemeinen etwa 50 % der Gesamtwandstärke der Wandteile, an welchen die Härtezonen P erzeugt werden. Zur Kühlung des Werkstücks nach vorausgegangener induktiver Erwärmung können die Außenflächen 30a, 30b des Werkstücks mit einem Abschreckmedium beaufschlagt werden. Die Kühlung vollzieht sich hier von der Werkstück-Außenfläche zu seiner erwärmten Innenfläche hin. Dieses Merkmal wird weiter unten noch näher erläutert.

Mit Hilfe des erfindungsgemäßen Verfahrens und der erfindungsgemäßen Einrichtung werden die Härtezonen P in den Flächen 30, 32 der verschiedenen Querschnittsausweitungen 20, 22 und 24 des Werkstücks A hergestellt, ohne daß hierbei sich die endseitigen Stirnflächen 10 und 12 des Werkstücks mehr als etwa 0,076 mm gegeneinander aus der Fluchtlinie verschieben bzw. sich eine dieses Maß übersteigende Konizität zwischen diesen Endflächen einstellt. Die Einrichtung weist gemäß den Fig. 2, 4, 6 und 7 eine Induktorvorrichtung C mit untenliegenden Induktorschleifen 150, 152 und 154 auf, die im wesentlichen der Form der Querschnittserweiterungen 20, 22 und 24 angepaßt und so bemessen sind, daß sie sich beim Einführen der Induktorvorrichtung in die Bohrung B um das Maß des Kopplungsspaltes im Abstand von den zugeordneten Flächen der Querschnittsausweitungen befinden. Die Schleifen 150, 152 und 154 sind von gleicher Ausbildung ; sie bestehen jeweils aus einem Induktor 160, der über Leitungen 162 und 164 von dem Strom einer Hochfrequenzstromquelle beaufschlagt werden kann. Die Leitungen 162 und 164 verbinden sämtliche Schleifen 150, 152 und 154 elektrisch in Reihe. Als Stromquelle wird ein Motor-Generatorsatz 170 verwendet, der mit seinen elektrischen Ausgängen 172 und 174 an die Leitungen 162 und 164 der Induktorvorrichtung angeschlossen ist, so daß die Induktorschleifen 150, 152 und 154 von dem Wechselstrom durchflossen werden. Mit Hilfe der stromdurchflossenen Schleifen werden die verschiedenen Flächen 30a und 32a des Werkstücks auf induktivem Wege erwärmt. Die Außenkontur der Induktorleitung 160 ist an den einzelnen Schleifen so ausgebildet, daß sich der Induktorleiter 160 beim Durchgang durch die Bohrung B im Abstand G zu den Flächen 30a und 32a befindet. Der Abstand G ist der magnetische Kopplungsspalt ; er beträgt im allgemeinen etwa 0,076 mm bis 0,1 mm. Der Induktorleiter 160 ist an den Schleifen so geformt, daß er sich von den Stegwänden 34 des Werkstücks in einem Abstand X befindet, der erheblich größer ist als der Kopplungsspalt G, so daß von dem Induktorleiter 160 die Innenflächen der Stegwände 34 nicht auf eine für das nachfolgende Härten ausreichende Temperatur erwärmt werden. Um im Zuge der induktiven Erwärmung gleichzeitig eine Abschreckung der erwärmten Flächen durchführen zu können, weist jede Schleife 150, 152 und 154 an der Unterseite ein Abschreckgehäuse 200 mit einer Vielzahl an Öffnungen oder Spritzdüsen 202 auf, die mit dem Innenraum 204 des Abschreckgehäuses in Verbindung stehen. Die Anschlußleitungen 162 und 164 sowie der Induktorleiter 160 bestehen aus Hohlleitern, die in Reihe miteinander verbunden sind, so daß durch diese Leiter ein Kühlmedium einer Kühlmittelquelle 210 zirkulieren kann, um eine übermäßige Erhitzung des Induktors zu vermeiden. Tragelemente 220, 222 und 224 dienen zusammen mit den starren Leitungen 162 und 164 zur Festlegung der Induktorvorrichtung C in vertikaler Richtung. Die Tragelemente 220, 222 und 224 sind hohl und jeweils über eine Leitungsverbindung 228 an eine gemeinsame Zuführung 226 für ein flüssiges Abschreckmedium angeschlossen. Bei eingeschalteter Zuführung 226 strömt die Abschreckflüssigkeit durch die Abschreckgehäuse 200, wobei sie durch die Öffnungen 202 hindurch gegen die Flächen 30a und 32a ausgespritzt wird. Die wahlweise Zu- und Abschaltung der Zuführung 226 für das Abschreckmedium kann mit Hilfe einer geeigneten Steuervorrichtung, z. B. einem programmierten Mikroprozessor od. dgl., durchgeführt werden.

Die Induktorvorrichtung C wird relativ zu den zu erwärmenden Flächen 30a und 30b der Bohrung B bewegt. Dies kann dadurch geschehen, daß die Induktorvorrichtung C stationär angeordnet und das Werkstück A gegenüber der stationären Induktorvorrichtung C axial beweglich gelagert wird. Umgekehrt könnte aber auch die Induktorvorrichtung C gegenüber dem stationär angeordneten Werkstück B bewegt werden. Für den axialen Vorschub der Induktorvorrichtung C oder des Werkstücks A können Vorschubantriebe unterschiedlicher Ausführungen Verwendung finden. Die dargestellte Einrichtung weist einen Werkstücksupport 100 in Gestalt einer Platte auf, an der das Werkstück B in der Arbeitslage festgelegt wird. Dies erfolgt beispielsweise mittels herkömmlicher Federklemmen, die, wie in Fig. 2 durch den Pfeil F angegeben, gegen die obere Stirnfläche 10 des Werkstücks drücken und damit das Werkstück A am Werkstücksupport 100 durch Klemmung festlegen. Anschließend wird die Induktorvorrichtung C gegenüber dem feststehenden Werkstück A axial in die Bohrung B eingeführt und aus der Werkstückbohrung herausgeführt.

Bei dem in der Zeichnung dargestellten bevorzugten Ausführungsbeispiel wird die Relativbewegung zwischen der Induktorvorrichtung C und dem Werkstück A durch die Hubbewegung des Werkstücks gegenüber der stationären Induktorvorrichtung C erreicht. Unabhängig davon, wie die Relativbewegung zwischen Induktorvorrichtung und Werkstück bewirkt wird, weist die dargestellte Einrichtung in dem plattenförmigen Werkstücksupport 100 Öffnungen 102 für die Ableitung der Abschreckflüssigkeit auf. Außerdem ist der Werkstücksupport mit einem Zentrierkragen 110 versehen, der in die untere Ausnehmung 52 des Werkstücks A einfaßt und damit das Werkstück in vertikaler Ausfluchtung zu der Induktorvorrichtung C an dem Werkstücksupport 100 zentriert. Der Werkstücksupport 100 ist mit weiteren Öffnungen 112 versehen, die in einer Innenkammer oder einer Ausnehmung 114 des Werkstücksupports 100 münden. In die Ausnehmung 114 kann sich der Abschreckkörper 200 hineinschieben, wenn sich die Induktorvorrichtung C mit dem Abschreckkörper 200 im Bereich des unteren Endes 12 des Werkstücks A befindet. Die Induktorvorrichtung C kann daher bis zum unteren Ende des Werkstücks A gebracht werden, um auch hier die Innenflächen der Bohrung zu erwärmen und zu härten. Die Öffnungen 102 und 112 dienen zur Ableitung des flüssigen Abschreckmediums. Letzteres kann von einer Druckquelle 118 über eine Leitung 120 einer Abschreckvorrichtung 130 zugeführt werden, die aus einem Abschreckring besteht, dessen dem Werkstück A zugewandte zylindrische Innenfläche 132 mit einer Vielzahl geringfügig nach unten geneigter Öffnungen oder Spritzdüsen 134 versehen ist, die mit der Innenkammer 136 der Abschreckvorrichtung 130 in Verbindung stehen. Die von der Druckquelle 118 über die Leitung 120 in die Kammer 136 gedrückte Abschreckflüssigkeit wird demgemäß unmittelbar gegen die Außenflächen der Wände 30, 32 und 34 des Werkstücks A ausgespritzt, wodurch diese Wände während der erfindungsgemäßen Härtebehandlung kühlgehalten werden.

Der bei der dargestellten Einrichtung verwendete Vorschubantrieb 250 weist einen Motor 252 auf, der ein Zahnrad 254 antreibt, welches im Zahneingriff mit einer Zahnstange 256 steht. Letztere ist mit dem jeweils angetriebenen Teil, also entweder der Induktorvorrichtung C oder dem Werkstücksupport 100 gekuppelt. Bei dem dargestellten Ausführungsbeispiel ist die Zahnstange 256 mit dem Werkstücksupport 100 verbunden, so daß über die angetriebene Zahnstange der Werkstücksupport zusammen mit dem Werstück A und dem Abschreckring 130 gegenüber der Induktorvorrichtung C gehoben und gesenkt werden kann.

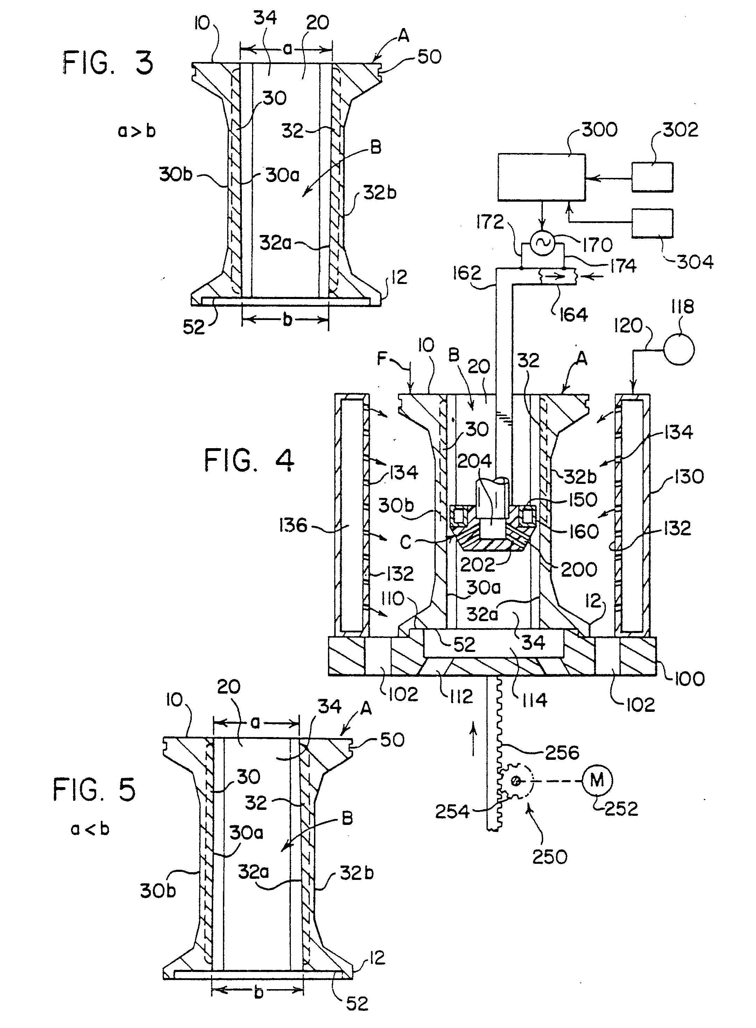

Zu Begin der Härtebehandlung an den Flächen 30, 32 der verschiedenen Ausweitungen 20, 22 und 24 der Bohrung B des Werkstücks A befindet sich die Induktorvorrichtung C in ihrer unteren Position. Bei den herkömmlichen Induktionshärteverfahren wird die Induktorvorrichtung C nach Stromeinschaltung durch die Bohrung B hindurch nach oben bewegt. Zugleich wird das Abschreckmedium durch die Düsenöffnungen 202 gegen die zuvor erwärmten Flächenbereiche gespritzt, so daß die Flächen 30a, 32a unmittelbar nach Vorbeigang an der Induktorleitung 160 abgeschreckt werden. Zugleich werden mit dem kontinuierlichen Erwärmen und Abschrecken der Innenflächen 30a, 32a die Außenflächen des Werkstücks A mit Hilfe des zylindrischen Abschreckringes 130 mit der Abschreckflüssigkeit beaufschlagt. Bei dieser Arbeitsweise erhält man gemäß Fig. 3 ein Werkstück A, dessen oberer Durchmesser a größer ist als sein unterer Durchmesser b, und zwar um einen Betrag, der in der Praxis etwa 0,15 mm bis 0,2 mm beträgt. Eine solche Konizität der Bohrung B des Werkstücks A ist unakzeptabel.

Mit der Erfindung wird dieser Nachteile dadurch vermieden, daß vor der im Zusammenhang mit Fig. 2 beschriebenen Arbeitsweise der im Zusammenhang mit Fig. 4 erläuterte Arbeitsvorgang durchgeführt wird. Hierbei wird die Induktorvorrichtung C in einem ersten Durchgang von der oberen Stirnfläche 10 zu der unteren Stirnfläche 12 des Werkstücks A hin durch die Bohrung B hindurchgeführt, wobei er von einer Steuereinrichtung 300 an den Strom des Motor-Generators 170 angeschlossen ist. Die Steuervorrichtung 300 weist einen Start-Befehlseingang 302 und eine Zeitsteuerung 304 auf. Nachdem das Startsignal für einen Arbeitszyklus ausgelöst worden ist, steuert die Zeitsteuerung 304 den Arbeitszyklus in der gewünschten Weise.

Bei Einschalten des Motor-Generators 170 durch die Vorrichtung 300 wird die Induktorvorrichtung C über die Anschlußleitungen 162 und 164 von dem Strom mit der jeweils gewählten Stromleistung beaufschlagt. Die Induktorvorrichtung C bewegt sich durch die Bohrung B des Werkstücks A von oben nach unten, wobei die Außenfläche des Werkstücks A mit Hilfe des Abschreckrings 130 gekühlt wird. Bei der Abwärtsbewegung der Induktorvorrichtung C in der Bohrung B wird lediglich eine Erhitzung der zu härtenden Flächen sowie eine Abkühlung bzw. Abschreckung von der Werkstück-Außenseite her durch Wärmeleitung über die Werkstück-Wandungen durchgeführt. Der Aufheizvorgang beginnt zu einem Zeitpunkt, in dem sich die Induktorvorrichtung C in einem Abstand unterhalb der oberen Stirnfläche 10 befindet, also bereits in die Bohrung B um ein bestimmtes Maß eingetaucht ist. Der Aufheizvorgang endet in einer Position, in der sich die Induktorvorrichtung C in Nähe des unteren Endes 12 des Werkstücks A befindet. Nach diesem ersten Durchgang der Induktorvorrichtung C durch die Bohrung B erfolgt nach einer gewissen Verweilzeit der zweite Durchgang, bei welcher die Induktorvorrichtung C sich von unten nach oben durch die Bohrung B bewegt, wie dies in Fig. 2 angedeutet ist. Während der vorgenannten Verweilzeit werden die zuvor erhitzten Werkstückflächen durch die Außenbeaufschlagung des Werkstücks mit der Abschreckflüssigkeit gekühlt. Dabei bilden sich die Härtezonen P in der gewünschten Ausbildung.

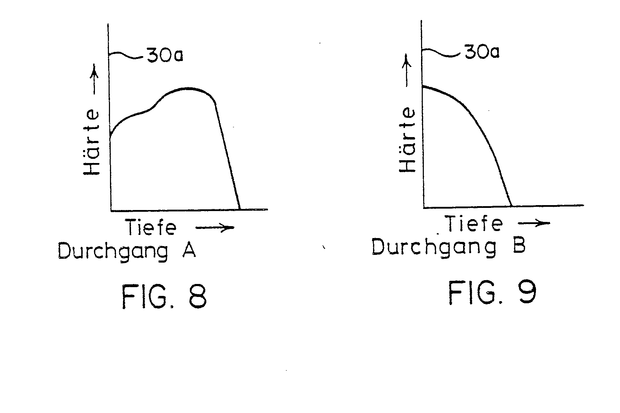

Die graphische Darstellung nach Fig. 8 zeigt das Härtebild nach dem ersten Induktor-Durchgang und der vorgenannten Verweilzeit. Es ist erkennbar, daß die Härte an einer Stelle, die im Abstand von der Fläche 30a liegt, größer ist, da das Abschrecken durch Wärmeableitung zur Außenseite 30b des Werkstücks A hin erfolgt. Das Werkstück erhält infolgedessen die in Fig. 5 gezeigte Anfangskonizität, bei der der Durchmesser a der Werkstückbohrung am oberen Ende kleiner ist als der Durchmesser b am unteren Ende des Werkstücks. Diese gezielt bewirkte Anfangskonizität ist entgegengesetzt der unerwünschten Konizität, die sich bei dem zweiten Durchgang (Fig. 2) am Werkstück A einstellt (Fig. 3). Die bei dem ersten Durchgang erzielte Vorkonizität gemäß Fig. 5 wird durch das Kristallgitter am Werkstück fixiert, bevor der zweite Durchgang gemäß Fig. 2 durchgeführt wird. Die beim ersten Durchgang gezielt bewirkte Vorkonizität wird beim Härtevorgang des zweiten Induktor-Durchgangs (Fig. 2) überlagert, so daß im Ergebnis ein Werkstück mit praktisch geradliniger Innenbohrung erhalten wird. Das im Ergebnis am fertigen Werkstück A erhaltene Härtebild ist in Fig. 9 schematisch verdeutlicht. Es entsteht eine gehärtete Außenfläche, die von der Innenfläche 30a aus mit der Eindringtiefe in das Werkstück allmählich abnimmt.

Im folgenden werden einige Betriebsparameter für ein bevorzugtes Ausführungsbeispiel der Erfindung beim Härten eines Werkstücks der genannten Art angegeben :

<div align="center">Beispiel I</div>

| | |
|---|---:|
| Werkstoff | 1 050 M Stahl |
| Oberflächenhärte | 58-64 RC |
| Härte in einer Tiefe von 1,02 mm | 50 RC |
| Abschreckmedium | 3 % VCONA |
| Abschrecktemperatur | 36,7 °C |
| Druck des Abschreckmediums (innen) | 0,2 kg/cm² |
| Druck des Abschreckmediums (außen) | 1,75 kg/cm² |
| Geschwindigkeit (abwärts) | 9,5 mm/s |
| Geschwindigkeit (aufwärts) | 9,5 mm/s |
| Wärme (abwärts) | 0-8,7 s |
| Abschreckung (außen) | 0-21,0 s |
| Erwärmung (aufwärts) | 9,0-17,7 s |
| Abschreckung (innen) | 9,0-21,0 s |
| Einstellung | 800 Volt, 219 A, 175 KW 175 KVAR 10 KC |
| Kopplungsspalt | 0,76 mm |

<div align="center">6</div>

# 0 070 409

Bei einer bevorzugten Verfahrensweise wird das Beispiel 1 in einigen Parametern geändert, welche die Differenz der Induktor-Geschwindigkeiten bei den beiden Durchgängen und die Differenz der Strombeaufschlagung des Induktors durch den Motor-Generatorsatz 170 bei den beiden Durchgängen betreffen. Diese Änderungen in den Parametern sind in dem folgenden Beispiel angegeben :

Beispiel II

Bei der Abwärtsbewegung des Induktors :

| | |
|---|---|
| verzögerte Induktoreinschaltung bei | 12,7 mm unterhalb der Werkstück-Oberseite |
| Induktorgeschwindigkeit | 16,5 mm/s |
| Strombeaufschlagung des Induktors | 88 KW, 10 KHz |
| Verzögerung vor Beginn des zweiten Induktor-Durchgangs | 2 s |
| Aufwärtsbewegung des Induktors Geschwindigkeit | 14 mm/s |
| Strombeaufschlagung des Induktors | 92 KW, 10 KHz |

## Patentansprüche

1. Verfahren zum Induktionshärten länglicher dünnwandiger Werkstücke, die eine Bohrung od. dgl. mit in Axialrichtung zumindest auf Teilbereichen gleichmäßiger Querschnittsform aufweisen, wobei zum Härten der Innenfläche der Bohrung mit einer vorbestimmten Einhärtetiefe und auf mindestens einem Teilbereich der Innenfläche eine der Querschnittform der Bohrung angepaßte Induktorvorrichtung unter Erhitzen der Innenfläche axial durch die Bohrung hindurchgeführt und gleichzeitig unmittelbar hinter der Induktorvorrichtung die erhitzte Innenfläche, vorzugsweise mittels eines flüssigen Abschreckmediums, abgeschreckt wird, dadurch gekennzeichnet, daß die strombeaufschlagte Induktorvorrichtung (C) zunächst in einem ersten Durchgang axial in der einen Richtung durch die Bohrung (B) und dann in einem zweiten Durchgang axial in der Gegenrichtung durch die Bohrung (B) geführt wird, wobei bei diesem zweiten Durchgang die Abschreckung der erhitzten Innenfläche (30a, 32a) hinter der Induktorvorrichtung (C) erfolgt.

2. Verfahren nach Anspruch 1, dadurch gekennzeichnet, daß die Induktorvorrichtung (C) bei den beiden Durchgängen durch die Bohrung (B) des vertikal angeordneten Werkstücks (A) bewegt wird, wobei sie zweckmäßig beim ersten Durchgang von oben nach unten und beim zweiten Durchgang von unten nach oben die Bohrung (B) durchläuft.

3. Verfahren nach Anspruch 1 oder 2, dadurch gekennzeichnet, daß beim ersten Durchgang der Induktorvorrichtung (C) durch die Bohrung (B) kein Abschreckmedium auf die erhitzte Innenfläche (30a, 32a) aufgebracht wird.

4. Verfahren nach einem der Ansprüche 1 bis 3, dadurch gekennzeichnet, daß die Werkstück-Außenfläche (30b, 32b) während des ersten Durchgangs und/oder während des zweiten Durchgangs der Induktorvorrichtung (C), vorzugsweise während beider Durchgänge, zumindest auf Teilbereichen mit dem Abschreckmedium beaufschlagt wird.

5. Verfahren nach einem der Ansprüche 1 bis 4, dadurch gekennzeichnet, daß die Induktorvorrichtung (C) während des zweiten Durchgangs mit derselben Stromleistung und/oder Stromfrequenz betrieben wird wie während des ersten Durchgangs.

6. Verfahren nach einem der Ansprüche 1 bis 5, dadurch gekennzeichnet, daß die Strombeaufschlagung der Induktorvorrichtung (C) beim ersten Durchgang erst nach dem Eintauchen der Induktorvorrichtung in die Bohrung (B) des Werkstücks (A) vorgenommen wird.

7. Verfahren nach einem der Ansprüche 1 bis 6, dadurch gekennzeichnet, daß beim zweiten Durchgang die Induktorvorrichtung (C) mit einer gegenüber dem ersten Durchgang abweichenden Stromleistung beaufschlagt wird.

8. Verfahren nach einem der Ansprüche 1 bis 7, dadurch gekennzeichnet, daß die linearen Durchführungsgeschwindigkeiten der Induktorvorrichtung (C) beim ersten und zweiten Durchgang unterschiedlich eingestellt werden.

9. Verfahren nach Anspruch 8, dadurch gekennzeichnet, daß die Durchführungsgeschwindigkeit der Induktorvorrichtung (C) beim ersten Durchgang kleiner eingestellt wird als beim zweiten Durchgang.

10. Verfahren nach einem der Ansprüche 1 bis 9, dadurch gekennzeichnet, daß die Induktorvorrichtung (C) beim zweiten Durchgang mit höherer Stromleistung beaufschlagt wird als beim ersten Durchgang.

11. Verfahren nach einem der Ansprüche 1 bis 10, dadurch gekennzeichnet, daß das Werkstück (A) gegenüber der stationären Induktorvorrichtung (C) bewegt wird.

12. Verfahren nach einem der Ansprüche 1 bis 11, dadurch gekennzeichnet, daß vor Beginn des zweiten Durchgangs der zu härtenden Werkstück-Innenfläche (30a, 32a) über eine bestimmte Zeitspanne hinweg Gelegenheit zur Abkühlung gegeben wird.

13. Verfahren nach einem der Ansprüche 1 bis 12, dadurch gekennzeichnet, daß langgestreckte, im wesentlichen parallele Flächenbereiche (30a, 32a) der Werkstück-Innenfläche gehärtet werden.

# 0 070 409

14. Verfahren nach einem der Ansprüche 1 bis 13, dadurch gekennzeichnet, daß eine Induktorvorrichtung (C) verwendet wird, die nur teilweise der Querschnittsform der Bohrung (B) angepaßt ist.

15. Einrichtung zur Ausübung des Verfahrens nach einem oder mehreren der Ansprüche 1 bis 14, mit einer Induktorvorrichtung (C), die der axialen Bohrung (B) des dünnwandigen Werkstücks (A) angepaßt, aber kleiner ist als die Queschnittsform der Bohrung (B), mit einer Stromquelle (170) zur Strombeaufschlagung der Induktorvorrichtung (C), mit einem Werkstücksupport (100) zur Halterung des Werkstücks (A) in vertikaler Achslage, mit einer Hubvorrichtung (250 bis 256) zur vertikalen Bewegung der Induktorvorrichtung (C) durch die Bohrung (B) in beiden Richtungen, und mit einer gemeinsam mit der Induktorvorrichtung durch die Bohrung (B) des Werkstücks (A) hindurchführbaren, vorzugsweise an der Induktorvorrichtung angeordneten Abschreckvorrichtung (200) zur Beaufschlagung der zu härtenden erhitzten Werkstück-Innenfläche (30a, 32a) mit einem flüssigen Abschreckmedium, dadurch gekennzeichnet, daß zusätzlich zu der die Werkstück-Innenfläche (30a, 32a) mit dem Abschreckmedium beaufschlagenden Abschreckvorrichtung (200) eine außenliegende Abschreckvorrichtung (130) zur wahlweisen Beaufschlagung der axialen Werkstück-Außenfläche mit dem Abschreckmedium vorgesehen ist.

16. Einrichtung nach Anspruch 15, dadurch gekennzeichnet, daß die außenliegende Abschreckvorrichtung (130) aus einem am hubbeweglichen Werkstücksupport (100) angeordneten Abschreckring besteht.

**Claims**

1. Method for the induction hardening of elongated thin-walled workpieces which have a bore or the like with its cross-section from uniform in the axial direction at least at part-regions, wherein, for hardening the inner surface of the bore to a pre-determined hardening depth and over at least a part-region of the inner surface, an inductor device adapted to the cross-sectional form of the bore is taken axially through the bore, with heating of the inner surface, and at the same time the heated inner surface is quenched directly after the inductor device preferably by means of a liquid quenching medium, characterised in that the energised inductor device (C) is first of all taken axially through the bore (B) in one direction in a first pass and then taken axially through the bore (B) in the opposite direction in a second pass, the quenching of the heated inner surface (30a, 32a) after the inductor device (C) being carried out in this second pass.

2. Method according to claim 1, characterised in that the inductor device (C) is moved through the bore (B) of the vertically situated workpiece (A) in both passes, and advantageously travels through the bore (B) in a downward direction in the first pass and upwardly in the second pass.

3. Method according to claim 1 or 2, characterised in that in the first pass of the inductor device (C) through the bore (B) no quenching medium is applied to the heated inner surface (30a, 32a).

4. Method according to one of claims 1 to 3, characterised in that the workpiece outer surface (30b, 32b) has the quenching medium applied to it at least at part-regions during the first pass and/or during the second pass of the inductor device (C), preferably during both passes.

5. Method according to one of claims 1 to 4, characterised in that the inductor device (C) is operated with the same current power and/or current frequency during the second pass as during the first pass.

6. Method according to one of claims 1 to 5, characterised in that current is supplied to the inductor device (C) in the first pass only after the introduction of the inductor device into the bore (B) of the workpiece (A).

7. Method according to one of claims 1 to 6, characterised in that in the second pass the inductor device (C) is supplied with a current power different from the first pass.

8. Method according to one of claims 1 to 7, characterised in that the linear pass speeds of the inductor device (C) in the first and second passes are set to differ from one another.

9. Method according to claim 8, characterised in that the pass speed of the inductor device (C) at the first pass is set to be lower than at the second pass.

10. Method according to one of claims 1 to 9, characterised in that the inductor device (C) is supplied with a higher current power in the second pass than in the first pass.

11. Method according to one of claims 1 to 10, characterised in that the workpiece (A) is moved relatively to the stationary inductor device (C).

12. Method according to one of claims 1 to 11, characterised in that the workpiece inner surface (30a, 32a) being hardened is given an opportunity to cool for a specific length of time before the start of the second pass.

13. Method according to one of claims 1 to 12, characterised in that elongated an substantially parallel surface regions (30a, 32a) of the workpiece inner surface are hardened.

14. Method according to one of claims 1 to 13, characterised in that an inductor device (C) is used which is only partly adapted to the cross-sectional form of the bore (B).

8

15. Apparatus for carrying out the method according to one or more of claims 1 to 14, with an inductor device (C) which is adapted to the axial bore (B) of the thin-walled workpiece (A) but is smaller than the cross-sectional form of the bore (B), with a current source (170) for supplying current to the inductor device (C), with a workpiece support (100) for holding the workpiece (A) in a vertical axial position, with a device (250 to 256) for moving the inductor device (C) vertically through the bore (B) in both directions, and with a quenching device (200) for applying a liquid quenching medium to the heated inner surface (30a, 32a) of the workpiece to be hardened, said quenching device being adapted to be taken jointly with the inductor device through the bore (B) of the workpiece (A) and being arranged preferably on the inductor device, characterised in that additionally to the quenching device (200) which applies quenching medium on to the workpiece inner surface (30a, 32a) an externally situated quenching device (130) is provided for the selective application of quenching medium to the axial outer surface of the workpiece.

16. Apparatus according to claim 15, characterised in that the external quenching device (130) comprises a quenching ring which is arranged on the reciprocatable workpiece support.

## Revendications

1. Procédé de durcissage par induction de pièces allongées, à paroi mince, qui présentent un alésage, ou analogue, de section à forme constante dans le sens axial au moins dans des zones partielles, dans lequel, pour durcir la surface interne de l'alésage avec une profondeur de durcissage prédéterminée, et sur au moins une zone partielle de cette surface interne, on fait passer un dispositif inducteur, adapté à la forme de la section de l'alésage, axialement à travers ce dernier en chauffant la surface interne et on trempe en même temps, immédiatement derrière le dispositif inducteur, la surface interne chauffée, de préférence au moyen d'un fluide de trempage liquide, caractérisé par le fait qu'on fait passer le dispositif inducteur (C), alimenté en courant électrique, tout d'abord dans l'un des sens à travers l'alésage (B), puis dans l'autre sens en un deuxième passage, le trempage de la surface interne chauffée (30a, 32a) ayant lieu, lors de ce deuxième passage, derrière le dispositif inducteur (C).

2. Procédé selon la revendication 1, caractérisé par le fait que le dispositif de trempage (C) est déplacé, lors des deux passages, à travers l'alésage (C) de la pièce disposée verticalement, parcourant avantageusement l'alésage (B) de haut en bas lors du premier passage et de bas en haut lors du second passage.

3. Procédé selon la revendication 1 ou 2, caractérisé par le fait que l'on n'applique aucun fluide de trempage sur la surface interne chauffée (30a, 32a) lors du premier passage du dispositif inducteur à travers l'alésage (B).

4. Procédé selon l'une des revendications 1 à 3, caractérisé par le fait qu'on soumet la surface externe de la pièce (30b, 32b) à un fluide de trempage pendant le premier passage et/ou pendant le second passage du dispositif inducteur (C), de préférence pendant les deux passages.

5. Procédé selon l'une des revendications 1 à 4, caractérisé par le fait que le dispositif inducteur (C) est actionné pendant le second passage avec la même puissance électrique et/ou la même fréquence que pendant le premier passage.

6. Procédé selon l'une des revendications 1 à 5, caractérisé par le fait qu'on alimente le dispositif inducteur (C) en courant électrique lors du premier passage qu'après l'avoir introduit dans l'alésage (B) de la pièce.

7. Procédé selon l'une des revendications 1 à 6, caractérisé par le fait que lors du second passage, le dispositif inducteur (C) est alimenté en puissance électrique qui diffère de celle du premier passage.

8. Procédé selon l'une des revendications 1 à 7, caractérisé par le fait que les vitesses linéaires de passage du dispositif inducteur (C) sont réglées à des valeurs différentes pour le premier passage et le second passage.

9. Procédé selon la revendication 8, caractérisé par le fait que la vitesse de passage du dispositif inducteur (C) est réglée à une valeur plus faible pour le premier passage que pour le second.

10. Procédé selon l'une des revendications 1 à 9, caractérisé par le fait que le dispositif inducteur (C) est alimenté lors du second passage avec une puissance électrique plus élevée que lors du premier passage.

11. Procédé selon l'une des revendications 1 à 10, caractérisé par le fait que la pièce (A) est déplacée relativement au dispositif inducteur (C) stationnaire.

12. Procédé selon l'une des revendications 1 à 11, caractérisé par le fait que, avant le début du second passage on donne, à la surface interne (30a, 32a) de la pièce à durcir, l'occasion de se refroidir pendant un intervalle de temps déterminé.

13. Procédé selon l'une des revendications 1 à 12, caractérisé par le fait que l'on durcit des zones de surface (30a, 32a) allongées et essentiellement parallèles de la surface interne.

14. Procédé selon l'une des revendications 1 à 13, caractérisé par le fait que l'on utilise un dispositif inducteur (C) qui n'est que partiellement adapté à la forme de la section de l'alésage (B).

15. Dispositif destiné à la mise en œuvre du procédé selon l'une ou plusieurs des revendications 1 à 14, comportant un dispositif inducteur (C), qui est adapté à l'alésage axial (B) de la pièce (A) à paroi mince mais est plus petit que la seciton de l'alésage (B), une source de courant (170) pour alimenter en courant le dispositif inducteur (C), un support de pièce (100) pour maintenir la pièce (A) dans une position axiale verticale, un dispositif de levage (250 à 256) pour déplacer verticalement le dispositif inducteur (C) à travers l'alésage (B) dans les deux sens et un dispositif de trempage (200) pouvant être déplacé en même temps que le dispositif inducteur à travers l'alésage (B) de la pièce (A), de préférence disposé sur le dispositif inducteur, pour soumettre la surface interne chauffée (30a, 32a) de la pièce à durcir, à un fluide de trempage, caractérisé par le fait qu'outre le dispositif de trempage (200) soumettant la surface interne de la pièce (30a, 32a) au fluide de trempage, un dispositif de trempage extérieur (130) est prévu pour soumettre à volonté la surface externe axiale de la pièce au fluide de trempage.

16. Dispositif selon la revendication 15, caractérisé par le fait que le dispositif de trempage externe (130) est disposé sur un anneau de trempage monté sur le support de pièce (100) mobile en hauteur.

0 070 409

FIG. 1

FIG. 2

FIG. 3

a > b

FIG. 4

FIG. 5

a < b

2

FIG. 6

FIG. 7

30a

Härte →

Tiefe →
Durchgang A

## FIG. 8

30a

Härte →

Tiefe →
Durchgang B

## FIG. 9